# EUROPEAN PATENT APPLICATION

(11) **EP 3 369 773 A1**
(43) Date of publication of application: **05.09.2018**
(21) Application number: 16859816.7
(22) Date of filing: 26.10.2016
(51) Int. Cl.: C08L 61/10

(54) **MATERIAL FOR FORMING PHENOLIC RESIN**

(30) Priority: 29.10.2015 JP 2015212693
(71) Applicant: Sumitomo Bakelite Co.Ltd., Shinagawa-ku Tokyo 140-0002 (JP); DENSO CORPORATION, Kariya-city, Aichi 448-8661 (JP)
(72) Inventor: KOIZUMI Koji, Tokyo 140-0002 (JP); WATANABE Yusuke, Tokyo 140-0002 (JP); IGAWA Ryoichi, Tokyo 140-0002 (JP); OKUYA Takahiro, Kariya-city Aichi 448-8661 (JP); HIDAKA Yuuji, Kariya-city Aichi 448-8661 (JP)
(74) Representative: Kuhnen & Wacker Patent- und Rechtsanwaltsbüro PartG mbB
(86) International application number: PCT/JP2016/081658
(87) International publication number: WO 2017/073586

(57) **Abstract**

A phenolic-resin molding material contains a novolac-type phenolic resin, a hexamethylene tetramin, and an inorganic filler. A total content of a content of the novolac-type phenolic resin and a content of the hexamethylene tetramin is 20 to 55 mass% with respect to an entirety of the phenolic-resin molding material. A content of the inorganic filler is 45 to 80 mass% with respect to the entirety of the phenolic-resin molding material. A content of the hexamethylene tetramin is 17 to 26 pts.mass with respect to an entirety of the novolac-type phenolic resin.

## Description

### CROSS REFERENCE TO RELATED APPLICATION

This application is based on and claims the benefit of priority from Japanese Patent Application No. 2015-212693 filed on October 29, 2015. The entire disclosure of the application is incorporated herein by reference.

### TECHNICAL FIELD

The present disclosure relates to a phenolic-resin molding material.

### BACKGROUND ART

A fuel pump mounted to a vehicle or the like includes a housing and an impeller. The housing includes an inner wall defining a pump chamber into which a fuel flows. The impeller is made of resin and housed in the housing. The impeller is positioned such that a clearance having a specified dimension is secured between the inner wall and the impeller. The impeller may be swelled due to the fuel and water contained in the fuel, therefore a rotation of the impeller may be stopped when the impeller is swelled and comes in contact with the housing. Thus, the dimension of the clearance is set to prevent the impeller from coming in contact with the housing. However, when the dimension of the clearance is too large, an abnormality, e.g., an increase of an output loss of the fuel pump or an increase of a power consumption of the fuel pump, may occur because the fuel leaks through the clearance. Therefore, it is required to find a resin material to suppress a dimensional change of the impeller, which is mounted to the fuel pump, due to the fuel and the water contained in the fuel. The dimensional change will be referred to as a swelling amount hereinafter.

Patent Literature 1 discloses an impeller for a fuel pump that is formed of a resin material that contains a phenolic aralkyl resin, a phenolic resin, and a glass fiber. In Patent Literature 1, a difference in a solubility parameter (SP value) between the resin material and water is increased such that the swelling amount due to the water contained in the fuel is reduced. In addition, a mechanical strength of the impeller for the fuel pump is increased by adding the glass fiber to the resin material.

### PRIOR ART LITERATURES

### PATENT LITERATURE

Patent Literature 1: JP H8-93690 A

### SUMMARY OF INVENTION

However, the resin material disclosed by Patent Literature 1, which is used to mold the impeller, includes a modified phenolic resin, thereby including a small quantity of cross-linking points between molecules. As a result, whereas the impeller of Patent Literature 1 has a great resistance to water, the swelling amount due to the fuel may increase since a crosslink density decreases. The swelling amount due to the fuel and the water also may increase when an interface adhesion between resin and the glass fiber is weak.

Thus, PPS (Polyphenylene Sulfide) resin is used extensively as a resin material for molding the impeller mounted to the fuel pump. The swelling amount of an impeller molded by the PPS resin is smaller than the swelling amount of an impeller molded by a resin material containing a modified phenolic resin.

However, in view of reducing the output loss of the fuel pump and reducing the power consumption, it is required to find another resin material, which reduces the swelling amount due to the fuel and the water as compared to the PPS resin, to decrease the dimension of the clearance defined between the impeller and the housing.

The present disclosure addresses the above-described issues, thus it is an objective of the present disclosure to provide a phenolic-resin molding material with which the swelling amount due to a fuel and water can be small.

In an aspect of the present disclosure, a phenolic-resin molding material contains a novolac-type phenolic resin, a hexamethylene tetramin, and an inorganic filler. A total content of a content of the novolac-type phenolic resin and a content of the hexamethylene tetramin is 20 to 55 mass% with respect to an entirety of the phenolic-resin molding material. A content of the inorganic filler is 45 to 80 mass% with respect to the entirety of the phenolic-resin molding material. A content of the hexamethylene tetramin is 17 to 26 pts.mass with respect to an entirety of the novolac-type phenolic resin.

Having considered that a quantity of cross-linking points of the novolac-type phenolic resin is large, the phenolic-resin molding material contains a large amount of the hexamethylene tetramin, which serves as a coupling agent that links the cross-linking points, to increase a crosslink degree. Therefore, the swelling amount of a phenolic resin (referred to as a resin portion hereinafter), which is formed of the novolac-type phenolic resin and the hexamethylene tetramin, due to the fuel and the water can be reduced.

Furthermore, the swelling amount can be reduced by increasing a content of the inorganic filler in the phenolic-resin molding material. Thus, the present disclosure can provide the phenolic-resin molding material that reduces the swelling amount and has both a resistance to the fuel and a resistance to the water.

### BRIEF DESCRIPTION OF DRAWINGS

The above and other objects, features and advantages of the present disclosure will become more apparent from the following detailed description made with reference to the accompanying drawings.
FIG. 1 is a view of a fuel pump having an impeller, which is molded by a molding material, according to an embodiment of the present disclosure.
FIG. 2 is a planar view of an impeller, which is molded by a molding material, according to an embodiment of the present disclosure.

### DESCRIPTION OF EMBODIMENTS

A phenolic-resin molding material in an embodiment of the present disclosure will be described. The phenolic-resin molding material may be referred to as "the molding material" hereinafter.

The molding material contains 20 to 55 pts.mass of a resin portion with respect to an entirety of the molding material preferably. In the present disclosure, the resin portion is a phenolic resin that is formed of a novolac-type phenolic resin and a hexamethylene tetramin. The molding material contains 45 to 80 pts.mass of an inorganic filler with respect to the entirety of the molding material preferably. A content of the resin portion is 20 to 30 mass%, and a content of the inorganic filler is 70 to 80 mass%, preferably.

Whereas the inorganic filler is not swelled, the resin portion is possibly swelled. Then, the molding material as a whole contains 55 mass% or less of the resin portion and 45 mass% or more of the inorganic filler. That is, the content of the resin portion, which is swelled possibly, is small, and the content of the inorganic filler, which is not swelled, is large. As a result, a swelling amount due to a fuel and water can be reduced.

In addition, in a case where the molding material is used in an injection molding, a deterioration of a flowability of the molding material is suppressed when the molding material as a whole contains 20 mass% or more of the resin portion and 80 mass% or less of the inorganic filler. As a result, productivity of a molded piece molded by the injection molding can be improved. Moreover, the molded piece molded by the molding material is damaged hardly, therefore the molded piece can be workable.

The resin portion contains the novolac-type phenolic resin and the hexamethylene tetramin. The resin portion contains 17 to 26 pts.mass of the hexamethylene tetramin with respect to an entirety (i.e., 100 pts.mass) of the novolac-type phenolic resin preferably. The content of the hexamethylene tetramin is in a range from 20 to 25 pts.mass more preferably.

When the content of the hexamethylene tetramin is 17 pts.mass or more with respect to the entirety of the novolac-type phenolic resin, a crosslink density of the resin portion is increased, therefore the swelling amount due to the fuel and the water can be reduced.

When the content of the hexamethylene tetramin is 26 pts.mass or less with respect to the entirety of the novolac-type phenolic resin, it can be suppressed that an excess amount of the hexamethylene tetramin is remained in the resin portion of the molding material. As a result, a generation of basic gas, which is generated due to the hexamethylene tetramin, can be suppressed. Therefore, the molded piece can be prevented from being swelled or damaged, when performing the injection molding with the molding material and performing a baking after the injection molding.

The novolac-type phenolic resin contains 90 to 100 pts.mass of a non-modified novolac-type phenolic resin preferably. The non-modified novolac-type phenolic resin has a molecular structure expressed by the following chemical formula (1). n represents an integral number, which is one or more, in the chemical formula (1).

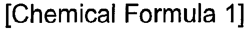

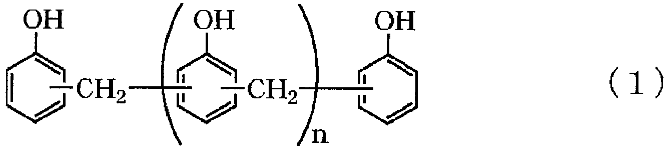

The non-modified novolac-type phenolic resin includes a larger quantity of cross-linking points where a cross-linking reaction occurs, as compared to a modified phenolic resin. Therefore, a content of the modified phenolic resin is 0 to10 pts.mass and a content of the non-modified novolac-type phenolic resin is 90 to 100 pts.mass, with respect to the entirety of the novolac-type phenolic resin preferably. The content of the modified phenolic resin is 0 to 5 pts.mass and the content of the non-modified novolac-type phenolic resin is 95 to 100 pts.mass more preferably. By increasing the content of the non-modified novolac-type phenolic resin, a crosslink density of the resin portion can be increased due to a chemical action of the non-modified novolac-type phenolic resin and the hexamethylene tetramin. Thus, the swelling amount of the resin portion due to the fuel and the water can be reduced.

The inorganic filler contains 50 to 65 pts.mass glass fiber with respect to an entirety (i.e., 100 pts.mass) of the inorganic filler preferably. The content of the glass fiber is 53 to 63 pts.mass with respect to the entirety of the inorganic filler more preferably. A mechanical strength of the molded piece can be improved when the content of the glass fiber is 50 pts.mass or more.

In addition, in a case where the molding material is used in the injection molding, the deterioration of the flowability of the molding resin is suppressed whereby the injection molding can be performed smoothly when the content of the glass fiber is 65 pts.mass or lower. As a result, productivity of the molded piece molded by the injection molding can be improved.

The inorganic filler contains 25 to 35 pts.mass of a clay with respect to the entirety of the inorganic filler preferably. The content of the clay is 30 to 34 pts.mass with respect to the entirety of the inorganic filler more preferably. The clay can be blended into the resin portion well, thereby entering into the resin portion finely and suppressing the swelling of the molded piece. Therefore, the swelling amount of the molded piece due to the fuel and the water can be reduced when the content of the clay is 25 pts.mass or more.

In the case where the molding material is used in the injection molding, the deterioration of the flowability of the molding resin is suppressed whereby the injection molding can be performed smoothly when the content of the clay is 35 pts.mass or lower. In addition, a detonation of the mechanical strength of the molded piece can be suppressed when the content of the clay is 35 pts.mass or lower.

The inorganic filler contains 5 to 15 pts.mass silica with respect to the entirety of the inorganic filler preferably. The content of the silica is 7 to 13 pts.mass with respect to the entirety of the inorganic filler more preferably. In the case where the molding material is used in the injection molding, the deterioration of the flowability of the molding resin is suppressed whereby the injection molding can be performed smoothly when the content of the silica is 5 pts.mass or more.

An effect of reducing the swelling amount of the molded piece can be secured when the content of the silica is 15 pts.mass or less.

The inorganic filler consists of a silicone compound without containing another compound such as calcium carbonate preferably. The silicone compound is reactive with a silane coupling agent. Therefore, by adding the silicone compound to the inorganic filler, an interface adhesion between the inorganic filler and the resin portion can be improved. As a result, the swelling amount of the molded piece due to the fuel and the water can be reduced. The silicone compound contains silicone. In the present embodiment, the silicone compound is, for example, silica, clay, talc, mica, a glass bead, a glass flake, or wollastonite.

The molding material may contain various fillers or various additive agents that are possibly added to a well-known thermosetting resin molding material. For example, the molding material contains a release agent such as stearic acid or zinc stearate, an adhesion improving agent or a coupling agent that improves an adhesion between the filler and the thermosetting resin, a color pigment or a dye such as carbon black, or a solvent.

An example of a manufacturing method for manufacturing the above-described molding material will be described hereafter. In a mixing step, the above-described contents of the raw material are mixed uniformly. In a kneading and melting step, the mixed raw materials are kneaded and melted while being heated. Subsequently, in a granulating step or a grinding step, the kneaded and melted material is granulated or grinded to be the molding material. The kneading and melting step is performed by a device, such as a rolling device, a kneader, or a twin screw extruder, alone or by a combination of the rolling device and another mixing device.

The molding material is suitable for the injection molding, however not limited to be used for the injection molding. For example, the molding material can be used for another method such as a transfer molding, a compression molding, and an injection compression molding.

The manufacturing method preferably includes a baking step in which the molded piece, which is molded by the above-described method such as the injection molding, is baked for a specified time period at a specified temperature. By baking the molded piece, the crosslink density of the resin portion can be further increased. The molding material is also baked in a baking step preferably. In the baking steps, the molding material and the molded piece are baked for 50 to 70 minutes at 160 to 180 °C. More preferably, the molding material and the molded piece are baked for 55 to 65 minutes at 165 to 175 °C.

Next, the molding material of the present disclosure will be described in more detail referring to examples hereafter. Table 1 shows a first to eighth examples that are examples of compositions of the molding material of the present disclosure. Table 2 shows a ninth to fourteenth examples that are examples of other compositions of the molding material of the present disclosure. However, it should be understood that the compositions of the present disclosure is not limited to the following examples.

A granular molding material is provided by the following method. First, raw materials mixed in compositions shown in Table 1 and Table 2 are kneaded by a heating roller at different rotational speeds such that the kneaded material is formed in a sheet shape. The kneaded material is cooled and grinded such that the granular molding material is provided. The kneading step using the heating roller is performed under a condition that the rotational speed of the heating roller is 20 rpm on a high-speed side and 14 rpm on a low-speed side, the specified temperature is 90 °C on the high-speed side and 20 °C on the low-speed side, and the specified time period for performing the kneading step is 5 to 10 minutes. Accordingly, the molding material obtains a specified flowability.

The molding material in the compositions of the first to fourteenth examples contains the following materials.
(1) novolac-type phenolic resin
(2) xylene-modified novolac-type phenolic resin
(3) hexamethylene tetramin
(4) glass fiber
(5) clay
(6) silica
(7) calcium carbonate
(8) silane coupling agent

Next, a molding method for molding a test piece, which is used for a characteristic evaluation, and a method of the characteristic evaluation are described hereafter.

### (Test Piece)

A bending test piece is formed by a compression molding. In the compression molding, a temperature of a die is 175 °C, and a setting time is 180 seconds. The bending test piece is 80 millimeters long, 10 millimeters wide and 4 millimeters thick. The bending test piece is cut to have 2 millimeters long. Thus, the test piece having a cuboid shape, which is 2 millimeters long, 10 millimeters wide and 4 millimeters thick, is provided. The test piece is baked for one hour at 170 °C in the baking step.

### (Molded Piece)

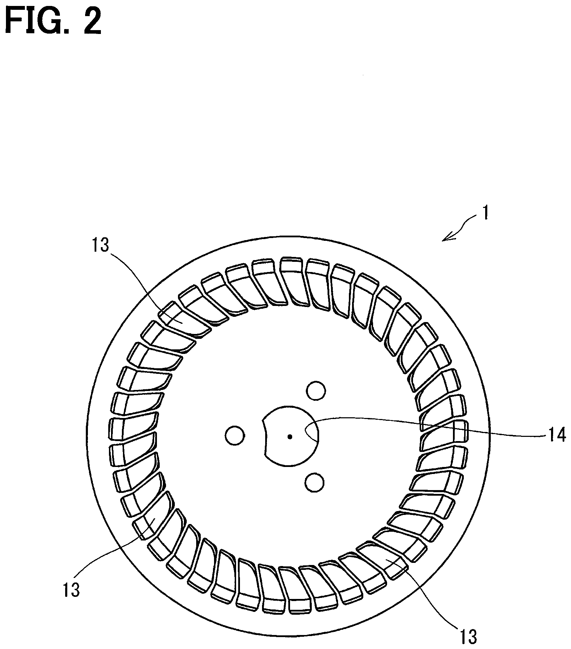

An impeller shown in FIG. 2 is molded by a transfer molding. In the transfer molding, a temperature of a die is 175 °C, and a setting time is 20 seconds. The molded piece is baked for one hour at 170 °C in the baking step.

More than one test pieces made of the molding material and more than one molded pieces formed of the test pieces are prepared by the above-described manufacturing method using the mixture of the above-described raw materials. Measurement results of the test pieces molded by the molding material in the compositions of the first to eighth examples are shown in the following Table 1, and measurement results of the test pieces molded by the molding material in the compositions of the ninth to fourteenth examples are shown in the following Table 2.

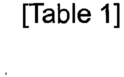

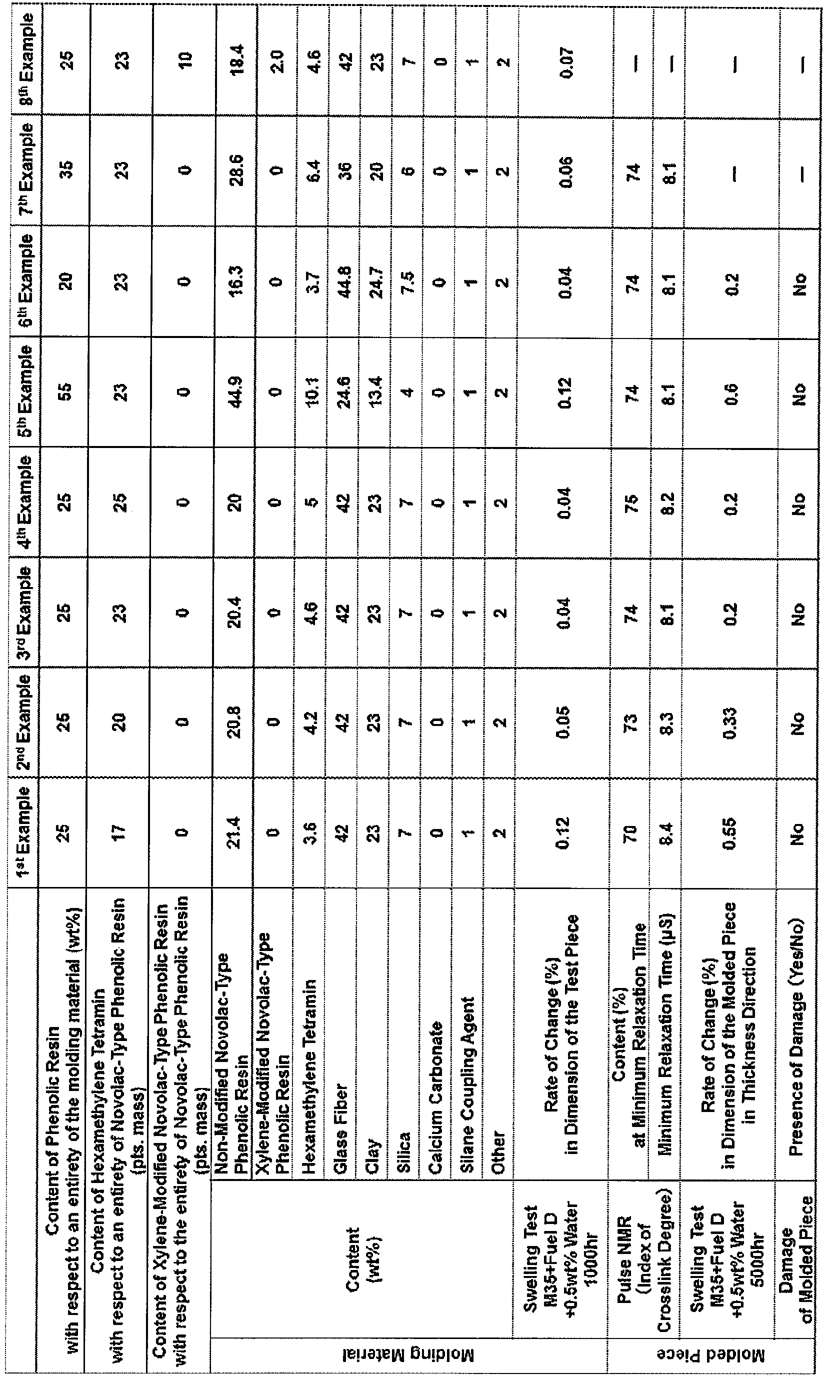

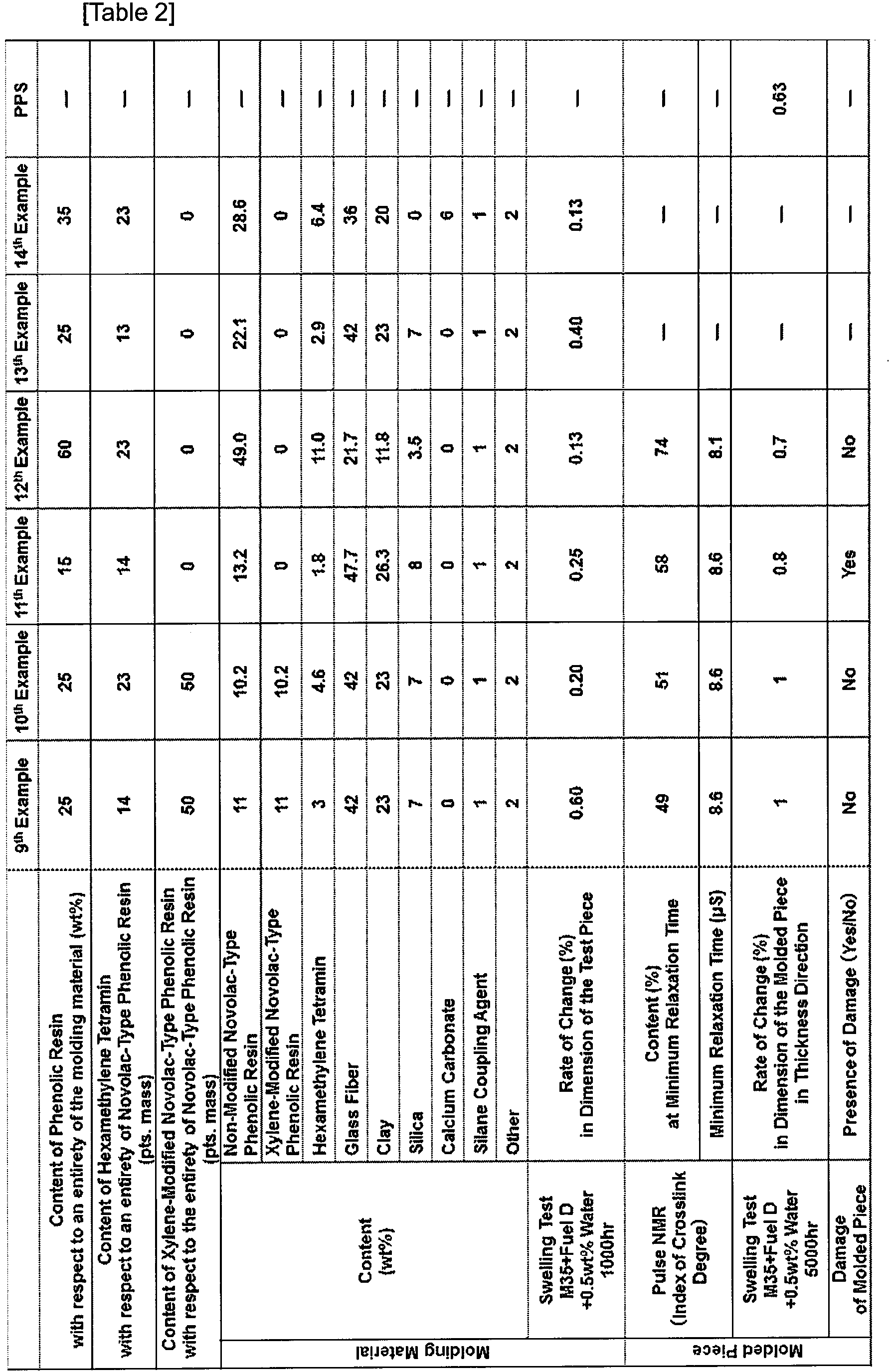

The test pieces formed of the molding material in the compositions of the first to fourteenth examples are soaked in a liquid, which contains 0.5 wt% water and the fuel D containing 35% methanol, for 1,000 hours. In Table 1 and Table 2, a rate of change (%) in dimension in a width direction of the test pieces is shown by a ratio (i.e., a dimensional change ratio) to a dimension of the test pieces as a whole before being soaked. The width direction is a direction in which the test pieces are 10 millimeters wide. A test temperature at which the test pieces are soaked in the liquid is 80 °C. The test temperature is set to 80 °C so as to correspond to a maximum limit of a temperature of a fuel of a vehicle.

As obvious from Table 1 and Table 2, the dimensional change ratios of the test pieces molded by the molding material in the compositions of the first to eighth examples are smaller than the dimensional change ratios of the test pieces molded by the molding material in the compositions of the ninth to fourteenth examples.

The molded pieces molded by the molding material in the compositions of the first to fourteenth examples are soaked in the liquid, which contains 0.5 wt% water and the fuel D containing 35% methanol, for 5,000 hours. In Table 1 and Table 2, a rate of change (%) in a dimension of a molded piece as a whole in a thickness direction, the dimension changed during the soaking, is shown by a ratio (i.e., a dimensional change ratio) to a thickness dimension of the molded piece as a whole before being soaked.

As obvious from Table 1 and Table 2, the dimensional change ratios of the molded pieces, in the thickness direction, molded by the molding material in the compositions of the first to sixth examples are smaller than the dimensional change ratios of the molded pieces, in the thickness direction, molded by the molding material in the compositions of the ninth to fourteenth examples.

Here, the dimensional change ratio of the molded piece, in the thickness direction, molded by the above-described PPS resin (R7-120NA manufactured by Solvay Corporation), is 0.63 % under the same conditions. Therefore, the dimensional change ratios of the molded pieces, in the thickness direction, molded by the molding material in the compositions of the first to sixth examples are smaller than the dimensional change ratio of the molded piece, in the thickness direction, molded by the PPS resin. On the other hand, the dimensional change ratios of the molded pieces, in the thickness direction, molded by the molding material in the compositions of the ninth to twelfth examples are larger than the dimensional change ratio of the molded piece, in the thickness direction, molded by the PPS resin.

The molding material in the compositions of the first to seventh and eleventh to fourteenth examples contains, as the novolac-type phenolic resin, only non-modified novolac-type phenolic resin. In the molding material in the composition of eighth example contains, the novolac-type phenolic resin contains 10 mass% of the modified novolac-type phenolic resin and 90 mass% of the non-modified novolac-type phenolic resin. The dimensional change ratio of the test piece molded by the molding material of the eighth example is 0.07%, i.e., is smaller than the dimensional change ratios of the test pieces molded by the molding material in the compositions of the ninth to fourteenth examples.

In contrast, in the molding materials of the ninth embodiment and the tenth embodiment contain, the novolac-type phenolic resin contains 50 mass% of the modified novolac-type phenolic resin and 50 mass% of the non-modified novolac-type phenolic resin. That is, the molding material in the compositions of the ninth and tenth examples contains a large amount of modified novolac-type phenolic resin. Therefore, it is presumed that the modified novolac-type phenolic resin suppresses the cross-linking reactions between the novolac-type phenolic resin and the hexamethylene tetramin, whereby the dimensional change ratios of the test pieces and the dimensional change ratios of the molded pieces increase in the ninth and tenth examples.

The molding material in the composition of the first example contains 17 pts.mass of the hexamethylene tetramin with respect to the entirety of the novolac-type phenolic resin. In other words, the content of the hexamethylene tetramin of the molding material in the first example is smaller than the contents of the hexamethylene tetramin of the molding material in the second to eighth examples. In the first example, the dimensional change ratio of the molded piece in the thickness direction is 0.55%, i.e., is smaller than the dimensional change ratio of the molded piece, in the thickness direction, molded by the PPS resin.

On the other hand, the molding material of the thirteenth example contains a smaller content of the hexamethylene tetramin as compared to the molding material of the first embodiment. Thus, it is presumed that the cross-linking reaction in the resin portion is not promoted, therefore the swelling amount increases.

The molding material of the third example contains 23 pts.mass of the hexamethylene tetramin, and the molding material of the fourth example contains 25 pts.mass of the hexamethylene tetramin. As a result of the swelling test to the molded pieces molded by the molding material in the compositions of the third and fourth examples, each of the dimensional change ratios of the molded pieces, in the thickness direction, molded by the molding material in the compositions of the third and fourth examples is 0.04%. Having considering the result, it is presumed that the cross-linking reaction is not promoted in the novolac-type phenolic resin even when the content of the hexamethylene tetramin increases above a specified content.

Next, a pulse NMR measurement is performed with the molded pieces molded by the molding material in the compositions of the first to sixth, ninth to twelfth and fourteenth examples. In Table 1 and Table 2, a content at the smallest spin-spin relaxation time is shown as "a content at a minimum relaxation time". The content at the minimum relaxation time is obtained by approximating a free induction decay curve, which is obtained by Solid Echo Method, with a sum of relaxation curves of three components. The more the content at the minimum relaxation time is, the higher the crosslink density is. The pulse NMR measurement is performed with more than one sample at 90 °C.

The contents at the minimum relaxation time of the molded pieces molded by the molding material in the compositions of the first to seventh examples are 70% or higher. The contents of the hexamethylene tetramin in the first, second, third and fourth examples increase in this order, therefore the contents at the minimum relaxation time increases in this order. In contrast, the contents at the minimum relaxation time of the molded pieces molded by the molding material in the compositions of the ninth, tenth and eleventh examples are smaller than 70 %.

In Table 1 and Table 2, a spin-spin relaxation time with a content making the spin-spin relaxation time smallest is shown as "the minimum relaxation time". That is, the shorter the minimum relaxation time is, the higher the crosslink density is. The minimum relaxation times of the molded pieces molded by the molding material in the compositions of the first to seventh examples is 8.5 microseconds or shorter. In addition, the contents of the hexamethylene tetramin of the first, second and third examples increase in this order, therefore the minimum relaxation times decrease in this order. The minimum relaxation times of the molded pieces molded by the molding material in the compositions of the ninth, tenth and eleventh examples are longer than 8.5 microseconds.

Having considered the results of the pulse NMR measurements, it can be determined that the swelling amount is reduced as the crosslink density increases.

Regarding the molded piece molded by the molding material in the composition of the twelfth example, the content at the minimum relaxation time is 70% or higher, and the minimum relaxation time is 8.5 microseconds or shorter. However, the molding material of the twelfth example contains 60 mass% of the resin portion. As a result, the dimensional change ratio of the molded piece molded by the molding material of the twelfth example is greater than the dimensional change ratio of the molded piece molded by the PPS resin.

The molding material of the sixth example contains 20 mass% of the resin portion. Damage is not found in the molded piece molded by the molding material of the sixth example. The molding material of the fifth example contains 55 mass% of the resin portion. Regarding the molded piece molded by the molding material of the fifth example, the dimensional change ratio in the thickness direction is 0.6%, i.e., is smaller than the dimensional change ratio of the molded piece, in the thickness direction, molded by the PPS resin.

On the other hand, the molding material of the twelfth example contains a large amount of the resin portion that is swelled possibly. Specifically, the molding material of the twelfth example contains 60 mass% of the resin portion. That is presumed to be a reason why the dimensional change ratio of the molded piece, in the thickness direction, molded by the molding material of the twelfth example is greater than the dimensional change ratio of the molded piece, in the thickness direction, molded by the PPS resin.

In the molding material in the compositions of the first to eighth examples, the inorganic filler consists of a silicone compound such as glass fiber, clay, or silica. The molding material of the fourteenth example is different from that of the seventh example in a point that the molding material contains calcium carbonate instead of silica. Therefore, the dimensional change ratio of the test piece molded by the molding material of the fourteenth example is 0.13%, i.e., is greater than the dimensional change ratio (0.06%) of the test piece molded by the molding material of the seventh example. Having considered the results, it is presumed that the silane coupling agent does not have an interface-adhesion effect on the test piece molded by the molding material of the fourteenth example therefore the swelling amount increases.

The molded piece molded by the molding material in the compositions of the above-described examples is suitable for a member that is used within a fuel of a vehicle.

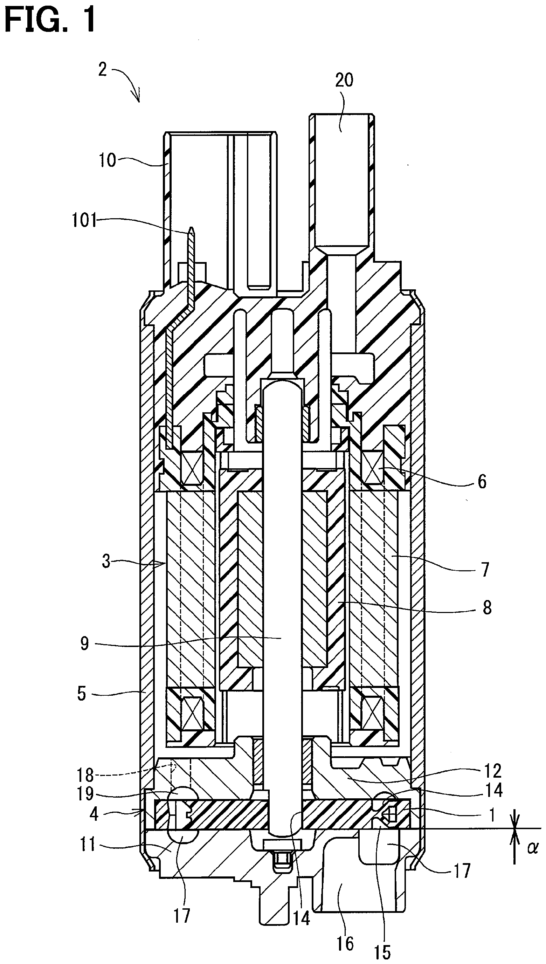

FIG. 1 shows a fuel pump 2 mounting an impeller 1. The impeller 1 is an example of the molded piece molded by the molding material in the compositions of the above-described examples. The fuel pump 2 is positioned inside a fuel tank of the vehicle.

### (Configuration of Fuel Pump)

A configuration of the fuel pump 2 will be described hereafter.

The fuel pump 2 includes a motor 3 and a pump 4. The motor 3 and the pump 4 are assembled integrally with each other by a pump case 5 having a tubular shape.

The motor 3 includes a stator 7, a rotor 8, and a shaft 9. A coil 6 is wound around the stator 7. The rotor 8 is rotatably positioned inside the stator 7. The shaft 9 rotates together with the rotor 8. The stator 7 generates a rotational magnetic field when electric power is applied to the coil 6, wound around the stator 7, from a terminal 101 of a connector 10. The rotor 8, in which an N pole and an S pole are alternately magnetized in a circumferential direction, rotates together with the shaft 9 around a rotational axis.

The pump 4 includes the impeller 1, a first pump housing 11, and a second pump housing 12.

The impeller 1 is made of resin. As shown in FIG. 1 and FIG. 2, the impeller 1 has a discoid shape and includes blade grooves 13 that are arranged in the circumferential direction. The impeller 1 includes a center hole 14 into which the shaft 9 of the motor 3 is fitted. Therefore, the impeller 1 rotates together with the shaft 9. The impeller 1 is not limited to have the shape shown in FIG. 1 and FIG. 2 and may have various shapes.

The impeller 1 is housed in a pump chamber 15 that is defined between the first pump housing 11 and the second pump housing 12. The first pump housing 11 and the second pump housing 12 are made of, e.g., metal such as aluminum.

The first pump housing 11 includes a suction port 16. The first pump housing 11 further includes a first groove 17 formed in a surface of the first pump housing 11 facing the impeller 1. The first groove 17 extends in C-shape along the circumferential direction. The suction port 16 is in communication with the first groove 17.

The second pump housing 12 includes a communication hole 18 through which a side of the second pump housing 12 adjacent to the impeller 1 is in communication with a side of the second pump housing 12 adjacent to the motor 3. The second pump housing 12 further includes a second groove 19 formed in a surface of the second pump housing 12 facing the impeller 1. The second groove 19 extends in C-shape along the circumferential direction. The communication hole 18 is in communication with the second groove 19.

When the impeller 1 rotates together with the shaft 9 of the motor 3, a fuel in a fuel tank in which the fuel pump 2 is located is drawn into the pump chamber 15 from the suction port 16, flows through the first groove 17, and is compressed in the blade grooves 13 due to the rotation of the impeller 1. The fuel flows through the second groove 19, and is discharged to the motor 3 from the communication hole 18.

The fuel, which is discharged toward the motor 3 from the pump 4, flows through a clearance defined between the housing and the stator 7 and a clearance defined between the stator 7 and the rotor 8. Subsequently, the fuel is discharged from a discharge port 20 of the fuel pump 2 and flows to an internal combustion engine.

### (Impeller for Fuel Pump)

The impeller 1 mounted to the fuel pump 2 will be described hereafter.

As shown in FIG. 1, the pump chamber 15 is defined between the first pump housing 11 and the second pump housing 12. In an aspect of the present disclosure, a clearance α having a specified dimension is defined between an inner wall defining the pump chamber 15 and the impeller 1. When the clearance a defined between the impeller 1 and the housing is large, the fuel may leak from the clearance a. As a result, an output loss of the fuel pump 2 may increase, or a power consumption of the fuel pump 2 may increase.

Here, the PPS resin may be employed as a resin material molding the impeller for the fuel pump in recent years. The swelling amount of the impeller, which is molded by the molding material in the compositions of the above-described examples, due to a liquid is smaller than the swelling amount of the impeller, which is molded by the PPS resin, due to the liquid. That is, the phenolic-resin molding material in the present disclosure is excellent in resistance to both the fuel and water.

The molding material in the compositions of the above-described examples is not limited to be used for molding the impeller of the fuel pump. For example, the molding material may be used for molding various molded pieces, which are used within the fuel, such as a fuel property sensor and a fuel pipe.

### (Modifications)

While the present disclosure has been described with reference to preferred embodiments thereof, it is to be understood that the disclosure is not limited to the preferred embodiments and constructions. The present disclosure is intended to cover various modification and equivalent arrangements within a scope of the present disclosure. It should be understood that structures described in the above-described embodiments are preferred structures, and the present disclosure is not limited to have the preferred structures. The scope of the present disclosure includes all modifications that are equivalent to descriptions of the present disclosure or that are made within the scope of the present disclosure.

## Claims

1. A phenolic-resin molding material that contains a novolac-type phenolic resin, a hexamethylene tetramin, and an inorganic filler, wherein
a total content of a content of the novolac-type phenolic resin and a content of the hexamethylene tetramin is 20 to 55 mass% with respect to an entirety of the phenolic-resin molding material,
a content of the inorganic filler is 45 to 80 mass% with respect to the entirety of the phenolic-resin molding material, and
a content of the hexamethylene tetramin is 17 to 26 pts.mass with respect to an entirety of the novolac-type phenolic resin.

2. The phenolic-resin molding material according to claim 1, wherein
the inorganic filler contains a glass fiber, and
a content of the glass fiber is in a range from 50 to 60 pts.mass with respect to an entirety of the inorganic filler.

3. The phenolic-resin molding material according to claim 1 or 2, wherein
the inorganic filler contains a clay, and
a content of the clay is in a range from 25 to 35 pts.mass with respect to an entirety of the inorganic filler.

4. The phenolic-resin molding material according to claim 2 or 3, wherein
the inorganic filler contains a silica, and
a content of the silica is in a range from 5 to 15 pts.mass with respect to the entirety of the inorganic filler.

5. The phenolic-resin molding material according to any one of claims 1 to 4, wherein the inorganic filler consists of a silicone compound.

6. The phenolic-resin molding material according to any one of claims 1 to 5, wherein
the inorganic filler contains a glass fiber and a clay,
a content of the glass fiber is in a range from 50 to 65 pts.mass with respect to an entirety of the inorganic filler, and
a content of the clay is in a range from 25 to 35 pts.mass with respect to the entirety of the inorganic filler.

7. The phenolic-resin molding material according to any one of claims 1 to 6, wherein
the novolac-type phenolic resin contains a non-modified novolac-type phenolic resin that has a molecular structure expressed by a chemical formula (1),
a content of the non-modified novolac-type phenolic resin is in a range from 90 to 100 pts.mass with respect to the entirety of the novolac-type phenolic resin, and
n represents an integral number, which is one or more, in the chemical formula.
